# EUROPEAN PATENT SPECIFICATION

(11) **EP 3 168 593 B1**
(45) Date of publication and mention of the grant of the patent: **01.01.2020**
(21) Application number: 16198540.3
(22) Date of filing: 11.11.2016
(51) Int. Cl.: G01M 99/00, B60N 2/01, B60N 2/07, G01M 17/007

(54) **SIMULATOR FOR POSITIONING THE SEATS IN A BUS**
SIMULATOR ZUR POSITIONIERUNG DER SITZE IN EINEM BUS
SIMULATEUR DESTINÉ À POSITIONNER LES SIÈGES DANS UN BUS

(30) Priority: 11.11.2015 IT UB20155465
(43) Date of publication of application: 17.05.2017
(73) Proprietor: IVECO FRANCE S.A.S., 69200 Vénissieux (FR)
(72) Inventor: NOVOTNY, Radomil, 69200 VENISSIEUX (FR)
(74) Representative: Franzolin, Luigi

(56) References cited:
- EP-A2- 0 940 288
- US-A1- 2007 158 979
- US-A1- 2014 195 277
- TESLA: "2014 Tesla Model S - Owner's manual (Europe)", INTERNET CITATION, 31 October 2013 (2013-10-31), pages 1-152, XP002751199, Retrieved from the Internet: URL:https://carmanuals2.com/get/tesla-mode l-s-2014-owner-s-manual-europe-36740 [retrieved on 2015-11-20]

## Description

The present invention concerns a simulator, in particular a simulator for the positioning of the seats in a bus.

One of the main design requirements of the internal spaces of buses is to guarantee the comfort of the passenger during a trip. In particular, the disposition of seats in a bus has become very important because it is necessary to allow the passenger to perform comfortably a variety of activities such as reading a paper, using a laptop or a tablet computer, using a reclining table or visualizing a screen both placed on the rear of the seat in front of the passenger or, further, reclining the seat during long trips.

Because of the variety of operations that could be performed by the passenger with respect to the past, the problem arises to find a reasonable compromise between the ergonomics and capacity of the bus.

A further production-related need is to propose on the market a limited number of configurations in order to maintain a high standardization of the dispositions of the seats, and to obtain therefore scale economies in the bus production.

Examples of seat arrangement of vehicles which can arrange the position of seats according to user settings are disclosed in documents EP0940288 A2 or US2007/0158979 A1.

Therefore, the need is felt to simulate in reality the disposition of the seats to test the ergonomics of a plurality of possible configurations.

An aim of the present invention is to satisfy the above mentioned need.

The aforementioned aim is reached by a simulator as claimed in claim 1.

For a better understanding of the present invention, a preferred embodiment is described in the following, by way of a non-limiting example, with reference to the attached drawings wherein:
Fig. 1 is a schematic lateral view illustrating a simulator for the configuration of seats according to the present invention;
Fig. 2 is a schematic top-view illustrating the operation of the simulator of Fig. 1; and
Figs. 3 and 4 are examples of a graphical interface of a control device of the simulator of Fig. 1.

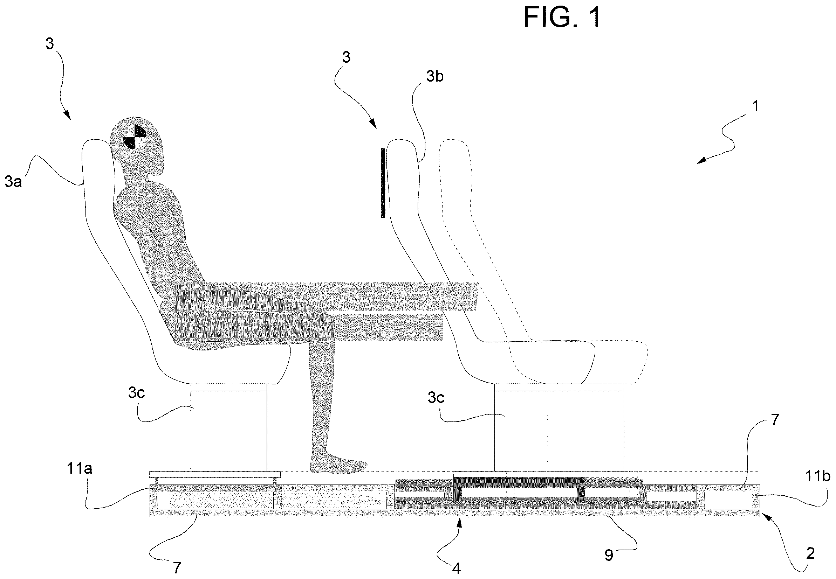

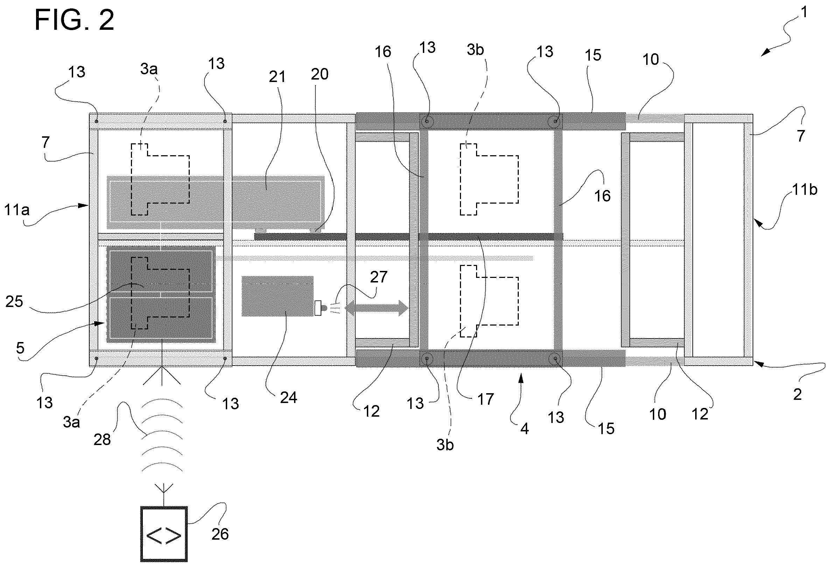

Figs. 1 and 2 disclose a simulator 1 for the positioning of bus seats essentially comprising:
   - a frame 2;
   - a plurality of seats 3, in the illustrated embodiment a pair of fixed seats 3a arranged side by side and a pair of movable seats 3b arranged side by side and placed in front of the pair of fixed seats 3a;
   - a driving device 4 configured to regulate the position of the movable seats 3b with respect to the fixed seats 3a; and
   - a control device 5 for controlling the handling device 4.

Frame 2 comprises a plurality of section bars 7 linked together to form a structure having a substantially rectangular shape. Frame 2 comprises, in a substantially central position, a portion 9 lowered with respect to a rear end portion 11a and a front end portion 11b, and defining a space 8.

Lowered portion 9 substantially comprises a couple of longitudinal tracks 10. Driving device 4 is positioned within space 8 and slides on tracks 10 between a couple of stops 12 fixed to portions 11a, 11b respectively. Fixed seats 3a are fixed to rear portion 11a and movable seats 3b are fixed to driving device 4.

Seats 3a, 3b are fixed by releasable links, e.g. by pegs 13 extending vertically from the rear portion 11a and, respectively, from the driving device 4, and configured to engage respective holes (not shown) of a support structure 3c of the seats 3. Alternatively, seats 3a, 3b can be linked by means of threaded connections or any other known type of releasable connections.

Seats 3 can be selected in a range of available seats models.

Driving device 4 comprises a couple of longitudinal bars 15 linked together by means of a couple of transversal bars 16. Bars 15 slide freely on tracks 10 of the lowered portion 9 of the frame 2, conveniently with the interposition of low friction material or rolling bearing guides.

Driving device 4 further comprises a central longitudinal rod 17 conveniently fixed to both transversal bars and linking the latter to an output element 20 of an actuator 21.

The actuator 21 may be a linear electric motor, a hydraulic or pneumatic cylinder or also a rotating electric motor provided with a suitable gearing. Actuator 21 is conveniently placed in the rear portion 11a. Actuator 21 is activated by control device 5 which is also preferably placed in the rear portion 11a. Control device 5 comprises a computer unit 25 and a distance sensor 24 for detecting an entity correlated with the distance of movable seats 3b respect to fixed seats 3a. Sensor 24 can be any distance sensor, preferably an ultrasound sensor.

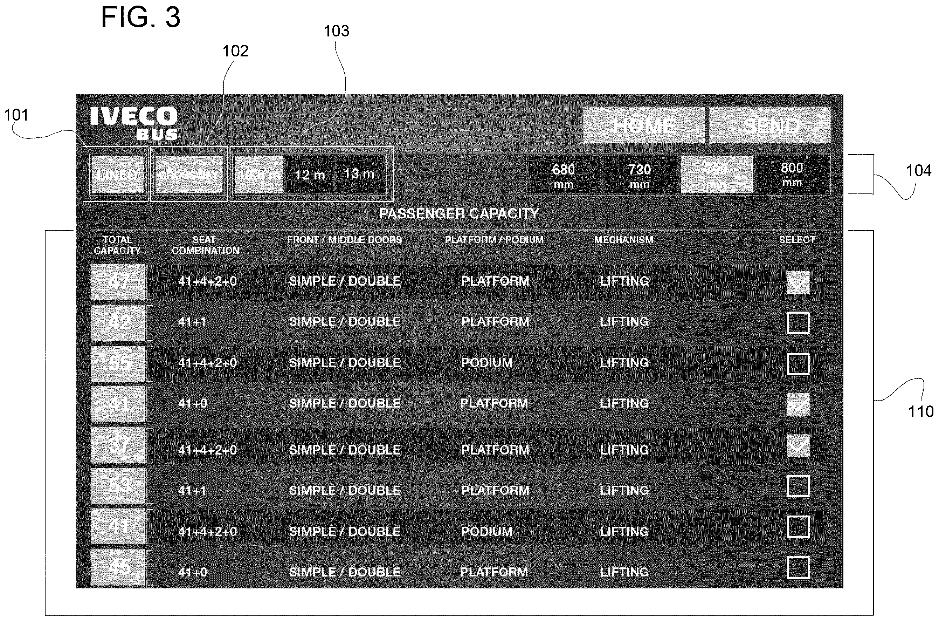

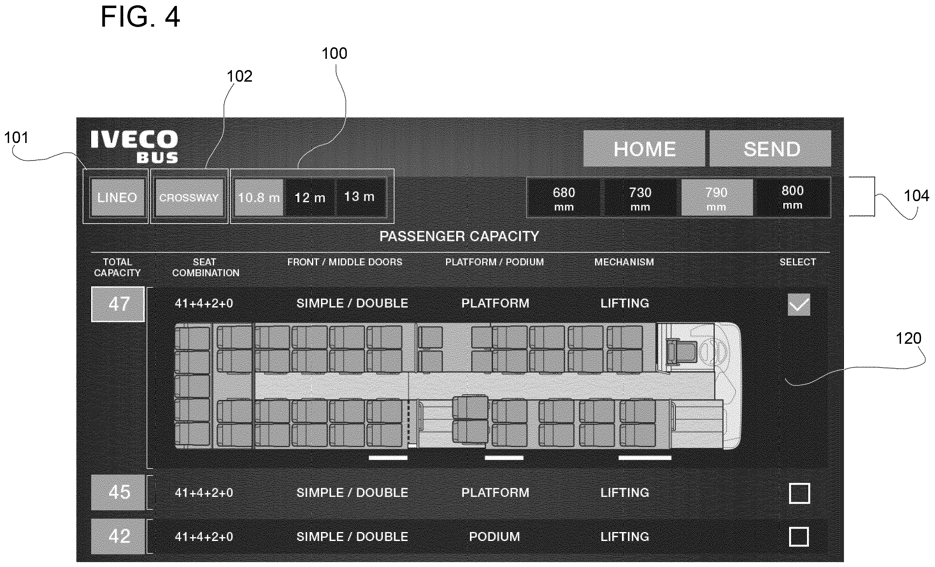

Computer unit 25 is configured to activate actuator 21 in response to input signals 28 received from a remote command device 26, i.e. a tablet or a laptop computer, and reference signals 27 received from sensor 24. Thanks to the remote command device 26, it is possible to visualize in a clear and precise manner the possible configurations of the seats 3a, 3b by means of a dedicated software provided with a graphical interface as the one shown in Figs. 3 and 4.

The graphical interface allows to select different configurations options of the bus seats, such as:
- the seat model (box 101);
- the bus type (box 102);
- the bus length (box 103);
- the distance between seats (box 104).

The result of the combination of selections in boxes 101, 102, 103 and 104 is shown in table 110 where a series of possible configurations of the seats are listed.

By selecting one or more of the possible configurations, the graphical interface moves to a new screen where such selected configurations are listed and are individually selectable to display a graphical scheme of the disposition of the seats in a bus, in order to easily compare the various configurations.

Once a configuration has been selected, it is possible to simulate physically a possible disposition of the seats 3 by the simulator 1. The remote device 30 sends an input signal 28 to the computer unit 25, which commands the displacement of driving device 4 until it reaches the desired position of movable seats 3b with respect to fixed seats 3a, detected by sensor 25, by means of a closed loop circuit control.

Once the movable seats 3b have been positioned, it is possible to make ergonomics tests in relation to the selected configuration. By successively selecting different configurations, it is possible to compare the ergonomics thereof.

In view of the foregoing, the advantages of simulator 1 according to the invention are apparent.

Simulator 1 allows a potential customer to try in reality the positioning of two pairs of seats 3 in a simple and economic manner in order to compare different configurations; this comparison is rapidly achieved through a graphical interface.

It is clear that modifications can be made to the described simulator 1 which do not extend beyond the scope of protection defined by the claims.

For example, driving device 4 or control device 5 can be substituted by equivalent devices with similar functions.

## Claims

1. Simulator (1) for positioning seats (3) in a bus, said simulator (1) comprising a frame (2) provided with fixing means (13) for at least a first seat (3a), a driving device (4) provided with fixing means (13) for at least a second seat (3b), a control device (5) configured to control said driving device (4), said driving device (4) being movable relatively to said frame (2) in at least one direction to vary a distance between said first seat (3a) and said second seat (3b) wherein the control device comprises a computer unit (25) and a remote command device (26) configured to send input signals to said computer unit (25) to set a predetermined distance between said first (3a) and second (3b) seats, according to a selected configuration of the seats,
wherein said remote command device (26) comprises a graphical interface configured for selecting different possible configurations of the seats, said graphical interface being configured to select the distance between seats, as well as some of the following parameters, as a configuration option :
- seat model;
- bus model;
- bus dimensions;
said graphical interface being configured to provide a preview of possible configurations of said seats into said bus.

2. Simulator as claimed in claim 1, wherein said fixing means (13) are configurable so that the first seat (3a) is placed in front of the second seat (3b) and in that the driving device (4) is movable in a longitudinal direction to vary the distance between said first (3a) and second (3b) seats.

3. Simulator as claimed in claim 1 or 2, further comprising fixing means (13) for a pair fixed seats (3a) arranged side by side and a pair of movable seats (3b) arranged side by side.

## Patentansprüche

1. Simulator (1) für die Positionierung von Sitzen (3) in einem Bus, wobei der Simulator (1) einen Rahmen (2), ausgestattet mit Fixiermitteln (13) für mindestens einen ersten Sitz (3a), eine Antriebsvorrichtung (4), ausgestattet mit Fixiermitteln (13) für mindestens einen zweiten Sitz (3b), und eine Steuervorrichtung (5), konfiguriert zur Steuerung der Antriebsvorrichtung (4), umfasst, wobei die Antriebsvorrichtung (4) relativ zu dem Rahmen (2) in mindestens eine Richtung verschiebbar ist, um einen Abstand zwischen dem ersten Sitz (3a) und dem zweiten Sitz (3b) zu variieren, wobei die Steuervorrichtung eine Rechnereinheit (25) und eine Fernsteuerungsvorrichtung (26) umfasst, konfiguriert zur Übertragung von Eingangssignalen an die Rechnereinheit (25), um einen vordefinierten Abstand zwischen dem ersten Sitz (3a) und dem zweiten Sitz (3b) bezüglich einer ausgewählten Konfiguration der Sitze einzustellen,
wobei die Fernsteuerungsvorrichtung (26) eine graphische Schnittstelle umfasst, konfiguriert zur Auswahl verschiedener möglicher Konfigurationen der Sitze, wobei die graphische Schnittstelle konfiguriert ist, um sowohl den Abstand zwischen den Sitzen, als auch mindestens einen der folgenden Parameter als eine Konfigurationsoption auszuwählen:
- Sitzmodell;
- Busmodell;
- Busabmessungen;
wobei die graphische Schnittstelle konfiguriert ist, um eine Vorschau von möglichen Konfigurationen der Sitze im Bus bereitzustellen.

2. Simulator (1) nach Anspruch 1, wobei die Fixiermittel (13) derart konfigurierbar sind, dass der erste Sitz (3a) vor dem zweiten Sitz (3b) platziert ist und die Antriebsvorrichtung (4) in einer Längsrichtung verschiebbar ist, um die Distanz zwischen dem ersten Sitz (3a) und dem zweiten Sitz (3b) zu variieren.

3. Simulator (1) nach Anspruch 1 oder 2, ferner umfassend Fixiermittel (13) für ein Paar fixierter Sitze (3a), welche nebeneinander angeordnet sind, und für ein Paar beweglicher Sitze (3b), welche nebeneinander angeordnet sind.

## Revendications

1. Simulateur (1) pour positionner des sièges (3) dans un bus, ledit simulateur (1) comprenant un cadre (2) pourvu de moyens de fixation (13) pour au moins un premier siège (3a), un dispositif d'entraînement (4) pourvu de moyens de fixation (13) pour au moins un deuxième siège (3b), un dispositif de commande (5) configuré pour commander ledit dispositif d'entraînement (4), ledit dispositif d'entraînement (4) étant mobile par rapport audit cadre (2) dans au moins une direction pour faire varier une distance entre ledit premier siège (3a) et ledit deuxième siège (3b), dans lequel le dispositif de commande comprend une unité informatique (25) et un dispositif de commande à distance (26) configuré pour envoyer des signaux d'entrée à ladite unité informatique (25) pour régler une distance prédéterminée entre lesdits premier (3a) et deuxième (3b) sièges, en fonction d'une configuration sélectionnée des sièges,
dans lequel ledit dispositif de commande à distance (26) comprend une interface graphique configurée pour sélectionner différentes configurations possibles des sièges, ladite interface graphique étant configurée pour sélectionner la distance entre les sièges, ainsi que certains des paramètres suivants, comme option de configuration :
- modèle de siège ;
- modèle de bus ;
- dimensions de bus ;
ladite interface graphique étant configurée pour fournir une prévisualisation de configurations possibles desdits sièges dans ledit bus.

2. Simulateur selon la revendication 1, dans lequel lesdits moyens de fixation (13) sont configurables de telle sorte que le premier siège (3a) est placé devant le deuxième siège (3b) et en ce que le dispositif d'entraînement (4) est mobile dans une direction longitudinale pour faire varier la distance entre lesdits premier (3a) et deuxième (3b) sièges.

3. Simulateur selon la revendication 1 ou 2, comprenant en outre des moyens de fixation (13) pour une paire de sièges fixés (3a) agencés côte à côte et une paire de sièges mobiles (3b) agencés côte à côte.
